# EUROPEAN PATENT SPECIFICATION

(11) **EP 1 890 462 B1**
(45) Date of publication and mention of the grant of the patent: **28.12.2011**
(21) Application number: 07112952.2
(22) Date of filing: 26.08.2005
(51) Int. Cl.: H04L 29/06

(54) **Methods for providing current authentication credentials for a wireless communication device**
Verfahren zur Bereitstellung aktueller Authentifizierungsdaten für ein schnurloses Kommunikationsendgerät
Méthodes pour fournir des données d'authentification actuelles à un appareil de communication sans fil

(43) Date of publication of application: 20.02.2008
(62) Divisional of application: 05255260.1
(73) Proprietor: RESEARCH IN MOTION LIMITED, Waterloo, Ontario N2L 3W8 (CA)
(72) Inventor: Plastid, Thomas Leonard Trevor, Ottawa Ontario K2B 5Z4 (CA); Lewis, Allan D., New Dundee Ontario N0B 2E0 (CA); Patterson, Ian M., Petersburg Ontario N0B 2H0 (CA)
(74) Representative: Fennell, Gareth Charles

(56) References cited:
- EP-A- 1 494 429
- US-A1- 2004 242 229
- WAP-FORUM: "WAP-182-ProvArch-20010314-a" WAP STANDARD, 14 March 2001 (2001-03-14), pages 1-22, XP002253357
- WAP FORUM: "PROVISIONING BOOTSTRAP ,WAP-184-ProvBoot-20010314-a" WAP STANDARD, 14 March 2001 (2001-03-14), pages 1-24, XP002253355

## Description

### FIELD OF THE INVENTION

The present invention generally relates to data service portability between wireless operators for a wireless communication device, and more specifically to dynamically updating data session authentication credentials of the wireless communication device as applicable to various wireless operators.

### BACKGROUND OF THE INVENTION

In a typical wireless portable communication device, a common data application using a common data service available across multiple wireless operator's networks, such as BlackBerry™, instant messaging ("IM"), multimedia messaging service ("MMS"), and/or push-to-talk over cellular ("PoC") available on Internet and/or a private network, is loaded at the manufacturer. Such wireless portable communication devices are shipped to multiple wireless service operators who require the use of different data authentication credentials for the common data application. For example, in a Code-Division Multiple Access ("CDMA") 2000 Ix Radio Transmission Technology ("1xRIT") network, where 1x refers to a single radio channel, for a third generation ("3G") mobile system, a network access identifier ("NAI") is used for a point-to-point protocol ("PPP"), and in a General Packet Radio Service ("GPRS"), an access point name ("APN") is used for a packet data protocol ("PDP") contexts.

For a particular wireless service operator, a specific data authentication is generally hard-coded into the wireless portable communications devices allocated for the particular wireless service operator as an operator customization. This method is the accepted practice in the industry, as it is highly desirable from a user's perspective, and obviates any need for the user to maintain knowledge of data authentication credentials. For example, an APN specifying a wireless bearer path for e-mail over one wireless service operator would be different from an APN for e-mail over another wireless service operator regardless of the fact that these wireless service operators may use the same server on the Internet. With local number portability laws in certain jurisdictions, such as those in the United States and European Union, subscribers are now allowed to switch wireless carriers while retaining the same telephone numbers in some circumstances. Generally, the local number portability relates to subscriber identification module ("SIM") lock for Global System for Mobile communications ("GSM") and GPRS networks, or Mobile Directory Number ("MDN") access as compared to International Mobile Subscriber Identity ("IMSI") in CDMA networks. However, with the prevalence of data centric wireless portable communication devices, some subscribers may wish not only to retain the current telephone numbers with a new wireless service provider, but also to continue using the same wireless portable communication devices and its data applications with the new wireless communication service provider.

EP 1,494,429 discloses a method for implementing secure corporate communication wherein a mobile device connects to a server via a publicly accessible network. After installation upon the device, a virtual private network (VPN) client connects the server and downloads a VPN profile. In one embodiment the device creates public/private key pairs and request enrolment of a digital certificate. In another embodiment a digital certificate and public/private key pairs are provided. The device also receives a digital certificate from the server and verifies the server certificate by requesting the user to supply a portion of a fingerprint for the certificate. The disclosure further includes an automatic content updating client that downloads a user profile for the VPN, requests client enrolment, and updates the VPN client and other applications when new content is available.

### BRIEF DESCRIPTION OF THE DRAWINGS

FIG. 1 is an exemplary environment in which a wireless portable communication device in accordance with at least one of the preferred embodiments may be practiced;
FIG. 2 is an exemplary flowchart illustrating a process in the wireless portable communication device for maintaining up-to-date authorization credentials for accessing the common data application in accordance with at least one of the preferred embodiments;
FIG. 3 is an exemplary block diagram of the wireless portable communication device configured to maintain appropriate authentication credentials required for the common data application in the current service network in accordance with at least one of the preferred embodiments; and
FIG. 4 is an exemplary flowchart illustrating a process in the wireless communication network for providing current authentication credentials required for the common data application accessible through the wireless communication network in accordance with at least one of the preferred embodiments.

### DETAILED DESCRIPTION OF THE PREFERRED EMBODIMENTS

A wireless portable communication device receives an up-to-date authentication credentials required for a common data application in a wireless communication network in which the wireless portable communication device is currently registered. The up-to-date authentication credentials may include a list of a plurality of wireless communication networks mapped against the up-to-date authentication credentials. The wireless portable communication device may receive the up-to-date authentication credentials periodically at a predetermined interval, based upon a predetermined condition, or by requesting the up-to-date authentication credentials. The up-to-date authentication credentials are then prioritized over existing authentication credentials, and are used for the common data application in the wireless communication network in which the wireless portable communication device is currently registered. The wireless communication network, which requires authentication credentials for the common data application, keeps the required authentication credentials up to date, and transmits the up-to-date authorization credentials periodically at a predetermined interval, based upon a predetermined condition, or in response to receiving a request for the up-to-date authentication credentials. The wireless communication network allows the wireless portable communication device having the up-to-date authentication credentials a use of the common data application.

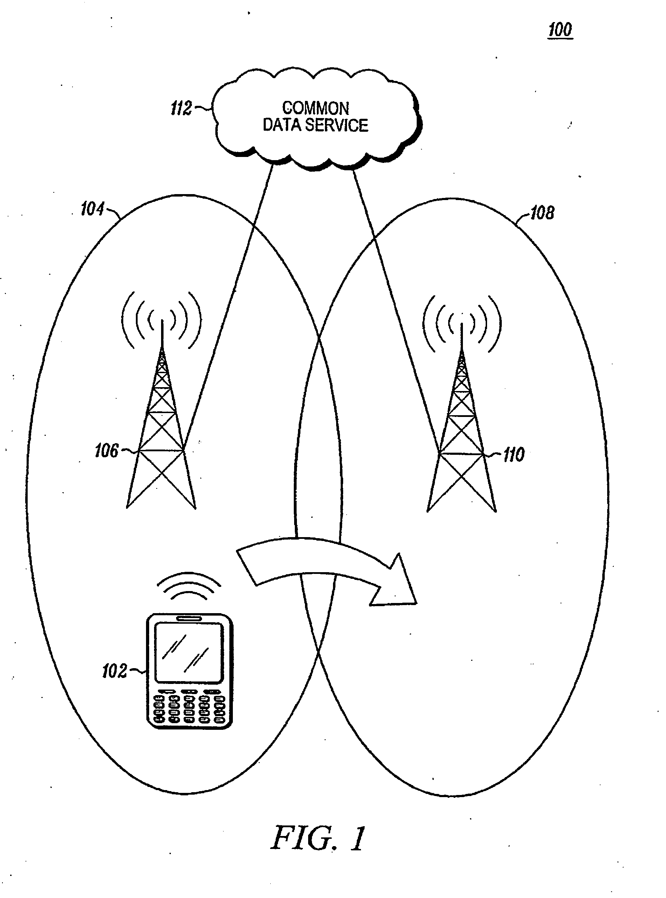

FIG. 1 is an exemplary environment 100 in which a wireless portable communication device 102 in accordance with at least one of the preferred embodiments may be practiced. The wireless portable communication device 102 is presently shown to be located in a first coverage area 104 supported by a first wireless communication network 106, which is adjacent to a second coverage area 108 supported by a second wireless communication network 110. The wireless portable communication device 102 has default authentication credentials for a common data application such as an e-mail application, which is maintained in a common service 112, accessed through the first wireless communication network 106. While the wireless portable communication device 102 is within the first coverage area 104 and is registered to the first wireless communication network 106, the wireless portable communication device 102, having the default authentication credentials fully compatible with the first wireless communication network 106, properly accesses the common data application. However, as the wireless portable communication device 102 moves from the first coverage area 104 to the second coverage area 108 and re-registers to the second wireless communication network 110, the default authentication credentials of the wireless portable communication device 102 may not be compatible to access the common data application in the second wireless communication network 110. For an exemplary case where the user is permanently changing his subscription to the operator of the wireless communication network 110, the wireless portable communication device 102 therefore needs to able to update the default authentication credentials to new authentication credentials that are compatible in the second wireless communication network 110 before being able to properly access the common data application. Further, the first wireless communication network 106 may change the default authentication credentials from time to time, and may cause the wireless portable communication device 102 to fail to access the common data application properly. Therefore, the wireless portable communication device 102 needs to be able to maintain up-to-date authentication credentials.

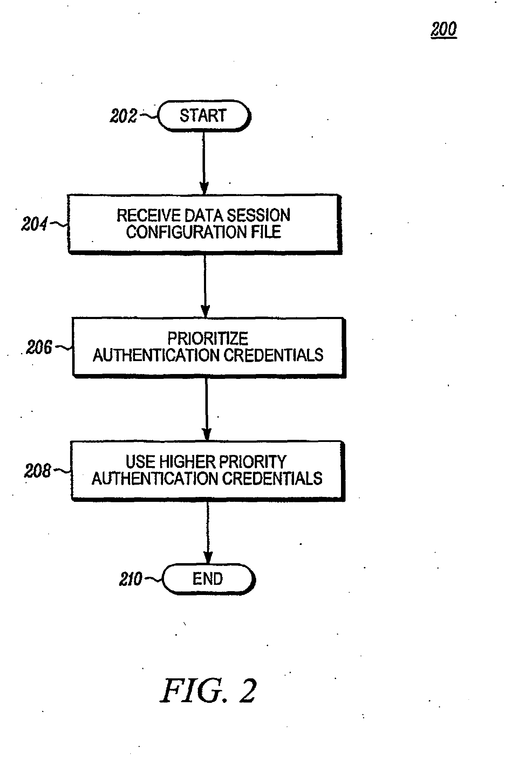

FIG. 2 is an exemplary flowchart 200 illustrating a process in the wireless portable communication device 102 for maintaining up-to-date authorization credentials for accessing the common data application in accordance with at least one of the preferred embodiments. The wireless portable communication device 102 has default authentication credentials required for the common data application in a default service network, which is the first wireless communication network 106. The process begins in block 202, and the wireless portable communication device 102 receives a data session configuration file, which includes authentication credentials in block 204. The wireless portable communication device 102 may typically receive the data session configuration file wirelessly from the current wireless communication network, but it may alternatively receive the data session configuration file by downloading from the internet. The data session configuration file may further include a list of a plurality of service networks mapped against the received authentication credentials for use with the common data application. This plurality applies as the user subscriptions to a plurality of wireless network operators change. The wireless portable communication device 102 may receive the data session configuration file based upon various conditions. The wireless portable communication device 102 may transmit a request to receive the data session configuration file, or may receive the data session configuration file based upon a predetermined condition. For example, the wireless portable communication device 102 may receive the data session configuration file upon registering to the current service network using a common registration channel, upon failing to properly access the common data application in the current service network, or upon roaming from the default service network to the current service network. The wireless portable communication device 102 may also autonomously receive the data session configuration file periodically.

The wireless portable communication device 102 may further determine the compatibility associated with the wireless portable communication device 102, a subscriber identity module in the wireless portable communication device 102, and the current wireless communication network, and may receive the data session configuration file based upon the compatibility. The subscriber identity module may be one of a Subscriber Identity Module ("SIM") used in networks based upon Global System for Mobile Communications ("GSM"), a Removable User Identification Module ("R-UIM") used in networks based upon Code Division Multiple Access ("CDMA"), or any other similar subscriber identification module.

In block 206, the wireless portable communication device 102 prioritizes the authentication credentials between the default authentication credentials and the received authentication credentials. For example, as previously shown in FIG. 1, when the wireless portable communication device 102 receives new authentication credentials as a result of moving from the first wireless communication network 106 to the second wireless communication network 110 requiring the new authorization credentials to access the common data application, the new received authorization credentials are prioritized over the default authorization credentials. Once prioritized, the default authentication credentials may be overwritten with the received authentication credentials, making the received authentication credentials as new default authentication credentials. Alternatively, both the default authentication credentials and the received authentication credentials are stored in the wireless portable communication device 102, and may be available for later usage. In block 208, the wireless portable communication device 102 uses the authentication credentials having higher priority for the common data application in the current service network. The authorization credentials may be re-prioritized when the wireless portable communication device 102 moves back to the first wireless communication network 106. The process then ends in block 210.

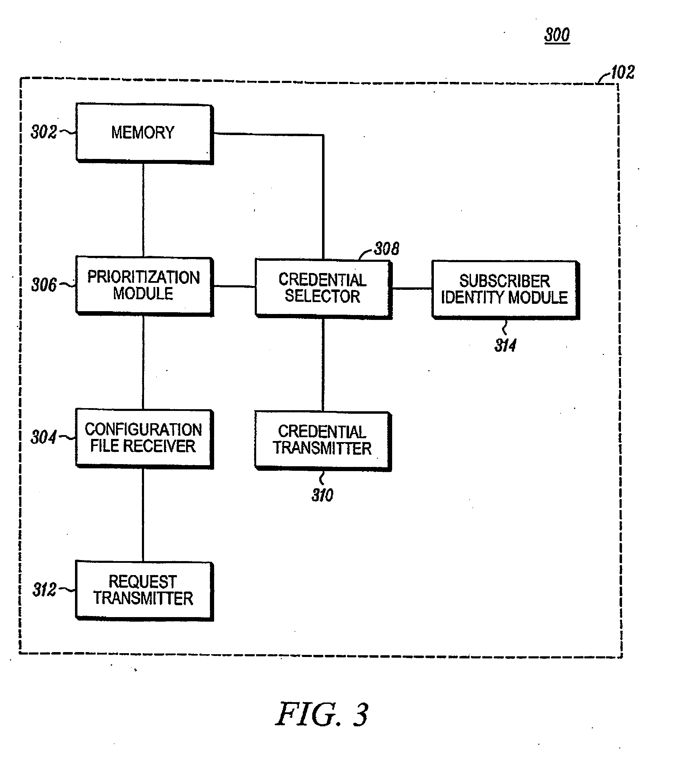

FIG. 3 is an exemplary block diagram 300 of the wireless portable communication device 102 configured to maintain appropriate authentication credentials required for the common data application in the current service network in accordance with at least one of the preferred embodiments. A battery, a display, a keypad, a speaker, a microphone, an antenna, and other normally associated components are understood to be present but are not specifically shown with the wireless portable communication device 102 for simplicity. The wireless portable communication device 102 has in memory 302 default authentication credentials, which are required for the common data application in a default service network, such as the first wireless communication network 104. The wireless portable communication device 102 has a configuration file receiver 304, which is configured to receive a data session configuration file. The data session configuration file includes authentication credentials, and may further include a list of a plurality of service network mapped against the received authentication credentials for use with the common data application. A prioritization module 306 is coupled to the configuration file receiver 304 and to the memory 302, and is configured to prioritize between the default authentication credentials and the received authentication credentials. A credential selector 308 is coupled to the prioritization module 306, and is configured to select the authentication credentials having higher priority for the common data application in the current service provider. A credential transmitter 310 is coupled to the credential selector 308, and is configured to transmit the selected authorization credentials for the common data application in the current service network. The wireless portable communication device 102 may further have a request transmitter 312, which is coupled to the configuration file receiver 304 and is configured to transmit a request to receive the data session configuration file. The memory 302 may be further coupled to the credential selector 308, and be further configured to be overwritten with the authentication credentials selected by the credential selector 308. The memory 302 may comprise volatile and non-volatile memory modules, having the default authentication credentials programmed in the non-volatile memory module and having the received authentication credentials in the volatile memory module.

The wireless portable communication device 102, specifically the configuration file receiver 304, may be further configured to receive the data session configuration file based upon various predetermined conditions. For example, the configuration file receiver 304 may be configured to receive the data session configuration file upon registration of the wireless portable communication device 102 to the current service provider using a common registration channel, upon failure of the wireless portable communication device 102 to properly access the common data application in the current service provider, or upon the wireless portable communication device 102 roaming from the default service network to the current service network. The configuration file receiver 304 may be further configured to autonomously receive the data session configuration periodically. Further, the bearer path may be entirely independent from the wireless network for receipt of the configuration file, for example, it may be downloaded off of the internet to the wireless portable communication device 102.

The wireless portable communication device 102 may further comprise a subscriber identity module 314 such as a Subscriber Identity Module ("SIM") used in networks based upon Global System for Mobile Communications ("GSM") and a Removable User Identification Module ("R-UIM") used in networks based upon Code Division Multiple Access ("CDMA") or via the service programming implemented directly on the wireless portable communication device 102 where no R-UIM is present The subscriber identity module 314 is coupled to the credential selector 308, and is configured to provide information to the current service network, such as the first wireless communication network 106 regarding the identity of a subscriber and associated services. Although typically a wireless portable communication device and its subscriber identity module are associated with the same wireless communication network provider, because the subscriber identity module is fully or partially compatible with similar wireless portable communication devices, the subscriber identity module associated with one wireless communication service provider may be used with a wireless portable communication device associated with another wireless communication service provider. Further, as a result of roaming or user subscription changes to other operators, such a combination of the wireless portable communication device and the subscriber identity module may register and operate in yet another wireless communication service provider's network. The configuration file receiver 304 may further be configured receive the data session configuration file based upon the compatibility among the wireless portable communication device 102, the subscriber identity module 314, and the current wireless communication network.

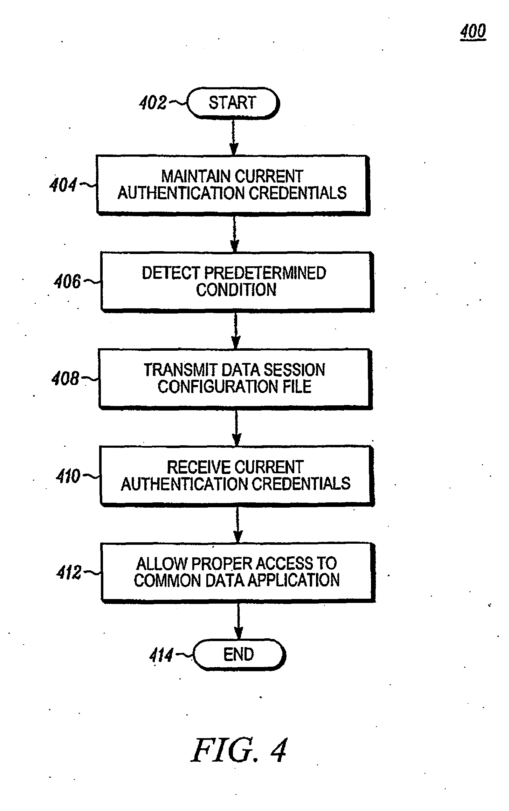

FIG. 4 is an exemplary flowchart 400 illustrating a process in the wireless communication network 106 for providing current authentication credentials required for the common data application accessible through the wireless communication network 106 in accordance with at least one of the preferred embodiments. The first wireless communication network 106 is simply referred as the wireless communication network 106 for this illustration. The process begins in block 402; and the wireless communication network 106 maintains the current, or up-to-date, authentication credentials indicative of currently required authentication credentials for the common data application in block 404. The wireless communication network 106 may maintain the current authentication credentials in various ways including, but not limited to, acquiring the current authentication credentials by communicating with common data service 112 periodically, and receiving the current authentication credentials from the common data service 112 as they are updated. The wireless communication network 106 then detects a predetermined condition for transmitting a data session configuration file in block 406. Alternatively, the common data service 112 may detect the predetermined condition through the wireless communication network 106. The data session configuration file includes the current authentication credentials, and may further include a list of a plurality of wireless communication networks mapped against the appropriate authentication credentials for use with the common data application. The predetermined condition to be detected in block 406 for transmitting the data session configuration may be one of various predetermined conditions including, but not limited to, receiving a request for the data session configuration file, receiving a registration of a wireless portable communication device using a common registration channel, determining a registered wireless portable communication device failing to properly access the common data application, and reaching a predetermined periodic transmission time interval. As one of the predetermined conditions, the wireless communication network 106, or the common data service 112, may further determine the compatibility associated with a wireless portable communication device registered in the wireless communication network 106, such as the wireless portable communication device 102, a subscriber identity module in the wireless portable communication device 102, and the wireless communication network 106 itself. The subscriber identity module may be one of a Subscriber Identity Module ("SIM") used in networks based upon Global System for Mobile Communications ("GSM"), a Removable User Identification Module ("R-UIM") used in networks based upon Code Division Multiple Access ("CDMA"), or any other similar subscriber identification module.

Upon detecting one of the predetermined conditions in block 406, the wireless communication network 106, or the common data service 112, transmits the data session configuration file in block 408, generally only to the wireless portable communication device 102, which triggered the predetermined condition detection process. Alternatively, the wireless communication network 106, or the common data service 112, may broadcast the data session configuration file periodically to all wireless portable communication devices currently registered to the wireless communication network 106. Upon receiving the current authentication credentials from the wireless portable communication device 102 in block 410, the wireless communication network 106 allows the wireless portable communication device 102 proper access to the common data application in block 412. The process then terminates in block 414.

While the preferred embodiments of the invention have been illustrated and described, it is to be understood that the invention is not so limited. Numerous modifications, changes, variations, substitutions and equivalents will occur to those skilled in the art without departing from the spirit and scope of the present invention as defined by the appended claims.

In one aspect, a method is provided in a wireless portable communication device for maintaining appropriate authentication credentials required for a common data application in a current service network, the wireless portable communication device having default authentication credentials required for the common data application in a default service network, the method comprising: receiving a data session configuration file including authentication credentials; prioritizing between the default authentication credentials and the received authentication credentials; and using the authentication credentials having higher priority for the common data application in the current service network.

The data session configuration file may further include a list of a plurality of service networks mapped against the received authentication credentials for use with the common data application.

The method may further comprise: transmitting a request to receive the data session configuration file before receiving the data session configuration file.

The method may further comprise: overwriting the default authentication credentials with the received authentication credentials after prioritizing between the default authentication credentials and the received authentication credentials.

The method may further comprise: making the received authentication credentials as new default authentication credentials.

Receiving the data session configuration file may include receiving the data session configuration file upon registering the wireless portable communication device to the current service network using a common registration channel.

Receiving the data session configuration file may include receiving the data session configuration file upon failing to properly access the common data application in the current service network.

Receiving the data session configuration file may include autonomously receiving the data session configuration file periodically.

Receiving the data session configuration file may include receiving the data session configuration file upon roaming from the default service network to the current service network.

Receiving the data session configuration file may include receiving the data session configuration file upon determining that the wireless portable communication device is associated with a different service network from the current service network.

Receiving the data session configuration file may include receiving the data session configuration file upon determining that a subscriber identity module used in the wireless portable communication device is associated with a different service network from at least one of: a service network associated with the wireless portable communication device, and the current service network.

The subscriber identity module may be at least one of a Subscriber Identity Module used in networks based upon Global System for Mobile Communications, and a Removable User Identification Module used in networks based upon Code Division Multiple Access.

Another aspect provides a wireless portable communication device configured to maintain appropriate authentication credentials required for a common data application in a current service network, the wireless portable communication device having default authentication credentials stored in memory, the default authentication credential required for the common data application in a default service network, the wireless portable communication device comprising: a configuration file receiver configured to receive a data session configuration file including authentication credentials; a prioritization module coupled to the configuration file receiver and to the memory, the prioritization module configured to prioritize between the default authentication credentials and the received authentication credentials; a credential selector coupled to the prioritization module, the credential selector configured to select the authentication credentials having higher priority for the common data application in the current service provider; and a credential transmitter coupled to the credential selector, the credential transmitter configured to transmit the selected authorization credentials for the common data application in the current service network.

The data session configuration file may further include a list of a plurality of service network mapped against the received authentication credentials for use with the common data application.

The wireless portable communication device may further comprise: a request transmitter coupled to the configuration file receiver, the request transmitter configured to transmit a request to receive the data session configuration file.

The memory storing the default authentication credentials may be further coupled to the credential selector and is further configured to be overwritten with the selected authentication credentials.

The configuration file receiver may be further configured to receive the data session configuration file upon registration of the wireless portable communication device to the current service provider using a common registration channel.

The configuration file receiver may be further configured to receive the data session configuration file upon failure of the wireless portable communication device to properly access the common data application in the current service provider.

The configuration file receiver may be further configured to autonomously receive the data session configuration periodically.

The configuration file receiver may be further configured to receive the data session configuration file upon the wireless portable communication device roaming from the default service network to the current service network.

The configuration file receiver may be further configured to receive the data session configuration file upon determination that the wireless portable communication device is associated with a different service network from the current service network.

The configuration file receiver may be further configured to receive the data session configuration file upon a determination that a subscriber identity module used in the wireless portable communication device is associated with a different service network from at least one of: a service network associated with the wireless portable communication device, and the current service network.

The subscriber identity module may be at least one of: a Subscriber Identity Module used in networks based upon Global System for Mobile Communications, and a Removable User Identification Module used in networks based upon code Division Multiple Access.

## Claims

1. A method for providing authentication credentials required for accessing a common data application accessible through a first and a second wireless communication network (106, 110) by a wireless portable communication device (102), the wireless portable communication device (102) having default authentication credentials required for accessing the common data application via a first wireless communication network (106) which may not be compatible for accessing the common data application through a second wireless communications network (110), the method comprising:
maintaining new authentication credentials that are compatible in the second wireless communications network (110) and required for accessing the common data application through the second wireless communications network (110);
detecting a predetermined condition for transmitting a data session configuration file;
transmitting the data session configuration file having the new authentication credentials; and
allowing proper access to the common data application via the second wireless communication network (110) upon receiving the new authentication credentials.

2. The method of claim 1, further comprising receiving new authentication credentials from a common data service (112).

3. The method of claim 1, wherein detecting a predetermined condition for transmitting a data session configuration file includes detecting the predetermined condition by a common data service (112).

4. The method of claim 1, wherein the data session configuration file further includes a list of a plurality of wireless communication networks mapped against the appropriate authentication credentials for use with the common data application.

5. The method of claim 1, wherein the predetermined condition for transmitting the data session configuration file includes:
receiving a request for the data session configuration file.

6. The method of claim 1, wherein the predetermined condition for transmitting the data session configuration file includes:
receiving a registration of the wireless portable communication device (102) using a common registration channel.

7. The method of claim 1, wherein the predetermined condition for transmitting the data session configuration file includes:
determining a registered wireless portable communication device (102) failing to properly access the common data application.

8. The method of claim 1, wherein the predetermined condition for transmitting the data session configuration file includes:
reaching a predetermined periodic transmission time interval.

9. The method of claim 8, wherein transmitting the data session configuration file includes:
broadcasting the data session configuration file.

10. The method of claim 1, wherein the predetermined condition for transmitting the data session configuration file includes:
determining that the wireless portable communication device (102) registered to the wireless communication network (110) is associated with a different wireless communication network from the wireless communication network (106).

11. The method of claim 1, wherein the predetermined condition for transmitting the data session configuration file includes:
determining that a subscriber identity module used in a registered wireless portable communication device (102) is associated with a different service network from at least one of:
the wireless communication network (110), and
a wireless communication network associated with the registered wireless portable communication device (102).

12. The method of claim 11, wherein the subscriber identity module is at least one of:
a Subscriber Identity Module used in networks based upon Global System for Mobile Communications, and
a Removable User Identification Module used in networks based upon Code Division Multiple Access.

13. The method of claim 1, which is performed by the wireless communication networks (106,110).

14. The method of claim 1, which is performed by a common data service (112) in which the common data application is maintained.

15. A second wireless communication network (110) which is adapted to provide authentication credentials required for accessing a common data application accessible through a first and the second wireless communication network (106, 110) by a wireless portable communication device (102), the wireless portable communication device (102) having default authentication credentials required for accessing the common data application via a first wireless communication network (106) which may not be compatible for accessing the common data application through the second wireless communication network (110), the second wireless communication network (110) further comprising:
means for maintaining new authentication credentials that are compatible in the second wireless communication network (110) and required for accessing the common data application through the second wireless communication network (110);
means for detecting a predetermined condition for transmitting a data session configuration file;
means for transmitting the data session configuration file having the new authentication credentials; and
means for allowing proper access to the common data application through the second wireless communication network (110) upon receiving the new authentication credentials.

16. The second wireless communication network (110) of claim 15, further comprising:
means for receiving the new authentication credentials from a common data service (112).

17. The second wireless communication network (110) of claim 15, wherein the
means for detecting a predetermined condition for transmitting a data session configuration file includes detecting the predetermined condition by a common data service (112).

18. The second wireless communication network (110) of claim 15, wherein the data session configuration file further includes a list of a plurality of wireless communication networks mapped against the appropriate authentication credentials for use with the common data application.

19. The second wireless communication network (110) of claim 15, wherein the means for detecting the predetermined condition for transmitting the data session configuration file includes:
means for receiving a request for the data session configuration file.

20. The second wireless communication network (110) of claim 15, wherein the means for detecting the predetermined condition for transmitting the data session configuration file includes:
means for receiving a registration of the wireless portable communication device (102) using a common registration channel.

21. The second wireless communication network (110) of claim 15, wherein the means for detecting the predetermined condition for transmitting the data session configuration file includes:
means for determining a registered wireless portable communication device failing to properly access the common data application.

22. The second wireless communication network (110) of claim 15, wherein the means for detecting the predetermined condition for transmitting the data session configuration file includes:
means for reaching a predetermined periodic transmission time interval.

23. The second wireless communication network (110) of claim 22, wherein the means for detecting the predetermined condition for transmitting the data session configuration file includes:
means for broadcasting the data session configuration file.

24. The second wireless communication network (110) of claim 15, wherein the means for detecting the predetermined condition for transmitting the data session configuration file includes:
means for determining that a wireless portable communication device registered to the wireless communication network (110) is associated with a different wireless communication network from the wireless communication network (106).

25. The second wireless communication network (110) of claim 15, wherein the means for detecting the predetermined condition for transmitting the data session configuration file includes:
means for determining that a subscriber identity module used in a registered wireless portable communication device (102) is associated with a different service network from at least one of: the second wireless communication network (110), and a wireless communication network associated with the registered wireless portable communication device (102).

26. The second wireless communication network (110) of claim 25, wherein the subscriber identity module is at least one of:
a Subscriber Identity Module used in networks based upon Global System for Mobile Communications, and
a Removable User Identification Module used in networks based upon Code Division Multiple Access.

## Patentansprüche

1. Verfahren zum Vorsehen einer Authentifizierungslegitimation, die erforderlich ist zum Zugreifen auf eine gemeinsame Datenanwendung, auf die über ein erstes und ein zweites drahtloses Kommunikationsnetzwerk (106, 110) durch eine drahtlose tragbare Kommunikationsvorrichtung (102) zugegriffen werden kann, wobei die drahtlose tragbare Kommunikationsvorrichtung (102) eine standardmäßige Authentifizierungslegitimation hat, die erforderlich ist zum Zugreifen auf die gemeinsame Datenanwendung über ein erstes drahtloses Kommunikationsnetzwerk (106), die nicht kompatibel sein kann zum Zugreifen auf die gemeinsame Datenanwendung über ein zweites drahtloses Kommunikationsnetzwerk (110), wobei das Verfahren aufweist:
Führen von neuer Authentifizierungslegitimation, die kompatibel ist in dem zweiten drahtlosen Kommunikationsnetzwerk (110) und erforderlich ist zum Zugreifen auf die gemeinsame Datenanwendung über das zweite drahtlose Kommunikationsnetzwerk (110);
Erfassen einer vorgegebenen Bedingung zum Übertragen einer Datensitzungskonfigurationsdatei;
Übertragen der Datensitzungskonfigurationsdatei mit der neuen Authentifizierungslegitimation; und
Ermöglichen eines zulässigen Zugriffs auf die gemeinsame Datenanwendung über das zweite drahtlose Kommunikationsnetzwerk (110) bei Empfang der neuen Authentifizierungslegitimation.

2. Verfahren gemäß Anspruch 1, das weiter aufweist Empfangen von neuer Authentifizierungslegitimation von einem gemeinsamen Datendienst (112).

3. Verfahren gemäß Anspruch 1, wobei das Erfassen einer vorgegebenen Bedingung zum Übertragen einer Datensitzungskonfigurationsdatei ein Erfassen der vorgegebenen Bedingung durch einen gemeinsamen Datendienst (112) umfasst.

4. Verfahren gemäß Anspruch 1, wobei die Datensitzungskonfigurationsdatei weiter umfasst eine Liste einer Vielzahl von drahtlosen Kommunikationsnetzwerken, zugeordnet zu der geeigneten Authentifizierungslegitimation, zur Verwendung mit der gemeinsamen Datenanwendung.

5. Verfahren gemäß Anspruch 1, wobei die vorgegebene Bedingung zum Übertragen der Datensitzungskonfigurationsdatei umfasst:
Empfangen einer Anforderung für die Datensitzungskonfigurationsdatei.

6. Verfahren gemäß Anspruch 1, wobei die vorgegebene Bedingung zum Übertragen der Datensitzungskonfigurationsdatei umfasst:
Empfangen einer Registrierung der drahtlosen tragbaren Kommunikationsvorrichtung (102) unter Verwendung eines gemeinsamen Registrierungskanals.

7. Verfahren gemäß Anspruch 1, wobei die vorgegebene Bedingung zum Übertragen der Datensitzungskonfigurationsdatei umfasst:
Bestimmen einer registrierten drahtlosen tragbaren Kommunikationsvorrichtung (102), die nicht-zulässig auf die gemeinsame Datenanwendung zugreift.

8. Verfahren gemäß Anspruch 1, wobei die vorgegebene Bedingung zum Übertragen der Datensitzungskonfigurationsdatei umfasst:
Erreichen eines vorgegebenen periodischen Übertragungszeitintervalls.

9. Verfahren gemäß Anspruch 8, wobei ein Übertragen der Datensitzungskonfigurationsdatei umfasst:
Aussenden (broadcasting) der Datensitzungskonfigurationsdatei.

10. Verfahren gemäß Anspruch 1, wobei die vorgegebene Bedingung zum Übertragen der Datensitzungskonfigurationsdatei umfasst:
Bestimmen, dass die drahtlose tragbare Kommunikationsvorrichtung (102), die an dem drahtlosen Kommunikationsnetzwerk (110) registriert ist, mit einem anderen drahtlosen Kommunikationsnetzwerk aus dem drahtlosen Kommunikationsnetzwerk (106) assoziiert ist.

11. Verfahren gemäß Anspruch 1, wobei die vorgegebene Bedingung zum Übertragen der Datensitzungskonfigurationsdatei umfasst:
Bestimmen, dass ein Teilnehmeridentitätsmodul, das in einer registrierten drahtlosen tragbaren Kommunikationsvorrichtung (102) verwendet wird, mit einem anderen Dienstnetzwerk assoziiert ist aus zumindest einem aus:
dem drahtlosen Kommunikationsnetzwerk (110), und
einem drahtlosen Kommunikationsnetzwerk, das mit der registrierten drahtlosen tragbaren Kommunikationsvorrichtung (102) assoziiert ist.

12. Verfahren gemäß Anspruch 11, wobei das Teilnehmeridentitätsmodul zumindest eines ist aus:
einem Teilnehmeridentitätsmodul (Subscriber Identity Module), das in Netzwerken basierend auf GSM (Global System for Mobile Communications) verwendet wird, und
einem R-UIM (Removable User Identity Module), das in Netzwerken basierend auf CDMA (Code Division Multiple Access) verwendet wird.

13. Verfahren gemäß Anspruch 1, das durch die drahtlosen Kommunikationsnetzwerke (106, 110) durchgeführt wird.

14. Verfahren gemäß Anspruch 1, das durch einen gemeinsamen Datendienst (112) durchgeführt wird, in dem die gemeinsame Datenanwendung geführt wird.

15. Zweites drahtloses Kommunikationsnetzwerk (110), das ausgebildet ist zum Vorsehen einer Authentifizierungslegitimation, die erforderlich ist zum Zugreifen auf eine gemeinsame Datenanwendung, auf die über ein erstes und das zweite drahtlose Kommunikationsnetzwerk (106, 110) durch eine drahtlose tragbare Kommunikationsvorrichtung (102) zugegriffen werden kann, wobei die drahtlose tragbare Kommunikationsvorrichtung (102) eine standardmäßige Authentifizierungslegitimation hat, die erforderlich ist zum Zugreifen auf die gemeinsame Datenanwendung über ein erstes drahtloses Kommunikationsnetzwerk (106), die nicht kompatibel sein kann zum Zugreifen auf die gemeinsame Datenanwendung über das zweite drahtlose Kommunikationsnetzwerk (110), wobei das zweite drahtlose Kommunikationsnetzwerk (110) weiter aufweist:
Mittel zum Führen von neuer Authentifizierungslegitimation, die kompatibel ist in dem zweiten drahtlosen Kommunikationsnetzwerk (110) und
erforderlich ist zum Zugreifen auf die gemeinsame Datenanwendung über das zweite drahtlose Kommunikationsnetzwerk (110);
Mittel zum Erfassen einer vorgegebenen Bedingung zum Übertragen einer Datensitzungskonfigurationsdatei;
Mittel zum Übertragen der Datensitzungskonfigurationsdatei mit der neuen Authentifizierungslegitimation; und
Mittel zum Ermöglichen eines zulässigen Zugriffs auf die gemeinsame Datenanwendung über das zweite drahtlose Kommunikationsnetzwerk (110) bei Empfang der neuen Authentifizierungslegitimation.

16. Zweites drahtloses Kommunikationsnetzwerk (110) gemäß Anspruch 15, das weiter aufweist:
Mittel zum Empfangen der neuen Authentifizierungslegitimation von einem gemeinsamen Datendienst (112).

17. Zweites drahtloses Kommunikationsnetzwerk (110) gemäß Anspruch 15,wobei das Mittel zum Erfassen einer vorgegebenen Bedingung zum Übertragen einer Datensitzungskonfigurationsdatei ein Erfassen der vorgegebenen Bedingung durch einen gemeinsamen Datendienst (112) umfasst.

18. Zweites drahtloses Kommunikationsnetzwerk (110) gemäß Anspruch 15, wobei die Datensitzungskonfigurationsdatei weiter umfasst eine Liste einer Vielzahl von drahtlosen Kommunikationsnetzwerken, zugeordnet zu der geeigneten Authentifizierungslegitimation, zur Verwendung mit der gemeinsamen Datenanwendung.

19. Zweites drahtloses Kommunikationsnetzwerk (110) gemäß Anspruch 15, wobei das Mittel zum Erfassen der vorgegebenen Bedingung zum Übertragen der Datensitzungskonfigurationsdatei umfasst:
Mittel zum Empfangen einer Anforderung für die Datensitzungskonfigurationsdatei.

20. Zweites drahtloses Kommunikationsnetzwerk (110) gemäß Anspruch 15, wobei das Mittel zum Erfassen der vorgegebenen Bedingung zum Übertragen der Datensitzungskonfigurationsdatei umfasst:
Mittel zum Empfangen einer Registrierung der drahtlosen tragbaren Kommunikationsvorrichtung (102) unter Verwendung eines gemeinsamen Registrierungskanals.

21. Zweites drahtloses Kommunikationsnetzwerk (110) gemäß Anspruch 15, wobei das Mittel zum Erfassen der vorgegebenen Bedingung zum Übertragen der Datensitzungskonfigurationsdatei umfasst:
Mittel zum Bestimmen einer registrierten drahtlosen tragbaren Kommunikationsvorrichtung, die nicht-zulässig auf die gemeinsame Datenanwendung zugreift.

22. Zweites drahtloses Kommunikationsnetzwerk (110) gemäß Anspruch 15, wobei das Mittel zum Erfassen der vorgegebenen Bedingung zum Übertragen der Datensitzungskonfigurationsdatei umfasst:
Mittel zum Erreichen eines vorgegebenen periodischen Übertragungszeitintervalls.

23. Zweites drahtloses Kommunikationsnetzwerk (110) gemäß Anspruch 22, wobei das Mittel zum Erfassen der vorgegebenen Bedingung zum Übertragen der Datensitzungskonfigurationsdatei umfasst:
Mittel zum Aussenden (broadcasting) der Datensitzu ngskonfigu rationsdatei.

24. Zweites drahtloses Kommunikationsnetzwerk (110) gemäß Anspruch 15, wobei das Mittel zum Erfassen der vorgegebenen Bedingung zum Übertragen der Datensitzungskonfigurationsdatei umfasst:
Mittel zum Bestimmen, dass eine drahtlose tragbare Kommunikationsvorrichtung, die an dem drahtlosen Kommunikationsnetzwerk (110) registriert ist, mit einem anderen drahtlosen Kommunikationsnetzwerk aus dem drahtlosen Kommunikationsnetzwerk (106) assoziiert ist.

25. Zweites drahtloses Kommunikationsnetzwerk (110) gemäß Anspruch 15, wobei das Mittel zum Erfassen der vorgegebenen Bedingung zum Übertragen der Datensitzungskonfigurationsdatei umfasst:
Mittel zum Bestimmen, dass ein Teilnehmeridentitätsmodul, das in einer registrierten drahtlosen tragbaren Kommunikationsvorrichtung (102) verwendet wird, mit einem anderen Dienstnetzwerk assoziiert ist aus zumindest einem aus: dem zweiten drahtlosen Kommunikationsnetzwerk (110), und einem drahtlosen Kommunikationsnetzwerk, das mit der registrierten drahtlosen tragbaren Kommunikationsvorrichtung (102) assoziiert ist.

26. Zweites drahtloses Kommunikationsnetzwerk (110) gemäß Anspruch 25, wobei das Teilnehmeridentitätsmodul zumindest eines ist aus:
einem Teilnehmeridentitätsmodul (Subscriber Identity Module), das in Netzwerken basierend auf GSM (Global System for Mobile Communications) verwendet wird, und
einem R-UIM (Removable User Identity Module), das in Netzwerken basierend auf CDMA (Code Division Multiple Access) verwendet wird.

## Revendications

1. Procédé de fourniture de certificats d'authentification exigés pour accéder à une application de données commune à laquelle il est possible à un dispositif de communication portatif sans fil (102) d'accéder par un premier et un second réseau de communication sans fil (106, 110), le dispositif de communication portatif sans fil (102) possédant des certificats d'authentification par défaut exigés pour accéder à l'application de données commune via un premier réseau de communication sans fil (106) qui peuvent ne pas être compatibles pour accéder à l'application de données commune via un second réseau de communication sans fil (110), le procédé comprenant les étapes consistant à :
maintenir de nouveaux certificats d'autorisation qui sont compatibles avec le second réseau de communication sans fil (110) et qui sont exigés pour accéder à l'application de données commune via le second réseau de communication sans fil (110) ;
détecter une condition prédéterminée pour transmettre un fichier de configuration de session de données ;
émettre le fichier de configuration de session de données comportant les nouveaux certificats d'authentification ; et
autoriser un accès correct à l'application de données commune via le second réseau de communication sans fil (110) après réception des nouveaux certificats d'authentification.

2. Procédé selon la revendication 1, comprenant en outre l'étape consistant à recevoir de nouveaux certificats d'authentification en provenance d'un service de données commun (112).

3. Procédé selon la revendication 1, dans lequel l'étape de détection d'une condition prédéterminée pour émettre un fichier de configuration de session de données comprend l'étape consistant à détecter la condition prédéterminée par un service de données commun (112).

4. Procédé selon la revendication 1, dans lequel le fichier de configuration de session de données comprend en outre une liste d'une pluralité de réseaux de communication sans fil correspondant aux certificats d'authentification appropriés, à utiliser avec l'application de données commune.

5. Procédé selon la revendication 1, dans lequel la condition prédéterminée pour l'émission du fichier de configuration de session de données comprend :
la réception d'une demande du fichier de configuration de session de données.

6. Procédé selon la revendication 1, dans lequel la condition prédéterminée pour l'émission du fichier de configuration de session de données comprend :
la réception d'un enregistrement du dispositif de communication portatif sans fil (102) sur un canal commun d'enregistrement.

7. Procédé selon la revendication 1, dans lequel la condition prédéterminée pour l'émission du fichier de configuration de session de données comprend :
la détermination du fait qu'un dispositif de communication portatif sans fil (102) enregistré ne parvient pas à accéder correctement à l'application de données commune.

8. Procédé selon la revendication 1, dans lequel la condition prédéterminée pour l'émission du fichier de configuration de session de données comprend :
l'arrivée à un intervalle de temps prédéterminé d'émission périodique.

9. Procédé selon la revendication 8, dans lequel l'étape d'émission du fichier de configuration de session de données comprend l'étape consistant à :
diffuser généralement le fichier de configuration de session de données.

10. Procédé selon la revendication 1, dans lequel la condition prédéterminée pour l'émission du fichier de configuration de session de données comprend :
la détermination du fait que le dispositif de communication portatif sans fil (102) enregistré auprès du réseau de communication sans fil (110) est associé à un réseau de communication sans fil différent du réseau de communication sans fil (106).

11. Procédé selon la revendication 1, dans lequel la condition prédéterminée pour l'émission du fichier de configuration de session de données comprend :
la détermination qu'un module d'identité d'abonné utilisé dans un dispositif de communication portatif sans fil (102) enregistré est associé à un réseau de service qui est différent d'au moins un des suivantes :
réseau de communication sans fil (110) ; et
réseau de communication sans fil associé au dispositif de communication portatif sans fil (102) enregistré.

12. Procédé selon la revendication 11, dans lequel le module d'identité d'abonné est au moins un des suivantes :
un module d'identité d'abonné utilisé dans les réseaux fondés sur la norme du Système mondial de communications sans fil ; et
un module amovible d'identification d'utilisateur utilisé dans les réseaux fondés sur la norme d'accès multiple par répartition de code.

13. Procédé selon la revendication 1, exécuté par les réseaux de communication sans fil (106, 110).

14. Procédé selon la revendication 1, exécuté par un service de données commun (112) qui maintient l'application de données commune.

15. Second réseau de communication sans fil (110) conçu pour fournir des certificats d'authentification exigés pour accéder à une application de données commune à laquelle il est possible à un dispositif de communication portatif sans fil (102) d'accéder par un premier et le second réseau de communication sans fil (106, 110), le dispositif de communication portatif sans fil (102) possédant des certificats d'authentification par défaut exigés pour accéder à l'application de données commune via un premier réseau de communication sans fil (106) qui peuvent ne pas être compatibles pour accéder à l'application de données commune via le second réseau de communication sans fil (110), le second réseau de communication sans fil (110) comprenant en outre :
un moyen destiné à maintenir de nouveaux certificats d'autorisation qui sont compatibles avec le second réseau de communication sans fil (110) et qui sont exigés pour accéder à l'application de données commune via le second réseau de communication sans fil (110) ;
un moyen destiné à détecter une condition prédéterminée pour transmettre un fichier de configuration de session de données ;
un moyen destiné à émettre le fichier de configuration de session de données comportant les nouveaux certificats d'authentification ; et
un moyen destiné à autoriser un accès correct à l'application de données commune via le second réseau de communication sans fil (110) après réception des nouveaux certificats d'authentification.

16. Second réseau de communication sans fil (110) selon la revendication 15, comprenant en outre :
un moyen destiné à recevoir de nouveaux certificats d'authentification en provenance d'un service de données commun (112).

17. Second réseau de communication sans fil (110) selon la revendication 15, dans lequel le moyen destiné à détecter une condition prédéterminée pour l'émission d'un fichier de configuration de session de données comprend la détection de la condition prédéterminée par un service de données commun (112).

18. Second réseau de communication sans fil (110) selon la revendication 15, dans lequel le fichier de configuration de session de données comprend en outre une liste d'une pluralité de réseaux de communication sans fil correspondant aux certificats d'authentification appropriés, à utiliser avec l'application de données commune.

19. Second réseau de communication sans fil (110) selon la revendication 15, dans lequel le moyen destiné à détecter une condition prédéterminée pour l'émission d'un fichier de configuration de session de données comprend :
un moyen destiné à recevoir une demande du fichier de configuration de session de données.

20. Second réseau de communication sans fil (110) selon la revendication 15, dans lequel le moyen destiné à détecter une condition prédéterminée pour l'émission d'un fichier de configuration de session de données comprend :
un moyen destiné à recevoir un enregistrement du dispositif de communication portatif sans fil (102) à l'aide d'un canal commun d'enregistrement.

21. Second réseau de communication sans fil (110) selon la revendication 15, dans lequel le moyen destiné à détecter une condition prédéterminée pour l'émission d'un fichier de configuration de session de données comprend :
un moyen destiné à déterminer qu'un dispositif de communication portatif sans fil échoue à accéder correctement à l'application de données commune.

22. Second réseau de communication sans fil (110) selon la revendication 15, dans lequel le moyen destiné à détecter une condition prédéterminée pour l'émission d'un fichier de configuration de session de données comprend :
un moyen destiné à atteindre un intervalle de temps prédéterminé d'émission périodique.

23. Second réseau de communication sans fil (110) selon la revendication 22, dans lequel le moyen destiné à détecter une condition prédéterminée pour l'émission d'un fichier de configuration de session de données comprend :
un moyen destiné à diffuser généralement le fichier de configuration de session de données.

24. Second réseau de communication sans fil (110) selon la revendication 15, dans lequel le moyen destiné à détecter une condition prédéterminée pour l'émission d'un fichier de configuration de session de données comprend :
un moyen destiné à déterminer qu'un dispositif de communication portatif sans fil enregistré auprès du réseau de communication sans fil (110) est associé avec un réseau de communication sans fil différent du réseau de communication sans fil (106).

25. Second réseau de communication sans fil (110) selon la revendication 15, dans lequel le moyen destiné à détecter une condition prédéterminée pour l'émission d'un fichier de configuration de session de données comprend :
un moyen destiné à déterminer qu'un module d'identité d'abonné utilisé dans un dispositif de communication portatif sans fil (102) enregistré est associé à un réseau de service qui est différent d'au moins un des suivantes : second réseau de communication sans fil (110) ; et réseau de communication sans fil associé au dispositif de communication portatif sans fil (102) enregistré.

26. Second réseau de communication sans fil (110) selon la revendication 15, dans lequel le module d'identité d'abonné est au moins un des suivantes :
un module d'identité d'abonné utilisé dans les réseaux fondés sur la norme du Système mondial de communications sans fil ; et
un module amovible d'identification d'utilisateur utilisé dans les réseaux fondés sur la norme d'accès multiple par répartition de code.
